# EUROPEAN PATENT SPECIFICATION

(11) **EP 4 089 199 B1**
(45) Date of publication and mention of the grant of the patent: **10.04.2024**
(21) Application number: 21851404.0
(22) Date of filing: 28.05.2021
(51) Int. Cl.: C22C 38/02, C22C 38/04, C22C 38/06, C21D 9/00, C22C 38/14, C21D 1/02, C22C 38/00, C22C 38/08, C21D 8/00, C22C 38/12

(54) **LOW TEMPERATURE-RESISTANT HOT-ROLLED H-TYPE STEEL FOR 355MPA MARINE ENGINEERING AND PREPARATION METHOD THEREFOR**
NIEDRIGTEMPERATURBESTÄNDIGER WARMGEWALZTER STAHL DES TYPS H FÜR DEN 355MPA-SCHIFFSBAU UND VERFAHREN ZUR HERSTELLUNG DAVON
ACIER DE TYPE H LAMINÉ À CHAUD RÉSISTANT À BASSE TEMPÉRATURE POUR L'INGÉNIERIE MARINE DE 355 MPA ET SON PROCÉDÉ DE PRÉPARATION

(30) Priority: 31.07.2020 CN 202010758762
(43) Date of publication of application: 16.11.2022
(73) Proprietor: Shandong Iron and Steel Company Ltd., Jinan, Shangdong 271104 (CN)
(72) Inventor: ZHAO, Peilin, Jinan, Shandong 271104 (CN); WANG, Zhongxue, Jinan, Shandong 271104 (CN); HAN, Wenxi, Jinan, Shandong 271104 (CN); LIU, Chao, Jinan, Shandong 271104 (CN); WANG, Jianjun, Jinan, Shandong 271104 (CN); SHANG, Guoming, Jinan, Shandong 271104 (CN); WU, Huiliang, Jinan, Shandong 271104 (CN); NING, Wei, Jinan, Shandong 271104 (CN); MA, Qiang, Jinan, Shandong 271104 (CN); ZHENG, Li, Jinan, Shandong 271104 (CN); WU, Wenjian, Jinan, Shandong 271104 (CN)
(74) Representative: Murgitroyd & Company
(86) International application number: PCT/CN2021/096629
(87) International publication number: WO 2022/022040

(56) References cited:
- CN-A- 101 812 632
- CN-A- 102 277 529
- CN-A- 103 540 844
- CN-A- 103 834 861
- CN-A- 104 073 731
- CN-A- 110 938 778
- CN-A- 111 945 064
- JP-A- S5 448 629
- JP-A- 2017 115 200
- JP-B2- 4 506 985

## Description

### TECHNICAL FIELD

The present invention relates to the field of smelting technology and rolling forming technology, in particular to a low-temperature-resistant hot-rolled H-type steel for marine engineering and a preparation method therefor.

### BACKGROUND

H-type steels dedicated to arctic and antarctic and other extremely cold regions are mainly applied in construction, ships, bridges, power station equipment, water conservancy, energy resources, chemical engineering, hoist-transporting machines and other steel structural parts with high loads. The ambient temperature in the above-mentioned regions is below -50°C all year round, which imposes extremely harsh requirements for the steels, especially on their low-temperature impact resistance. Hot-rolled H-type steels of traditional materials are completely unable to meet the requirements of material use in the regions, whether in terms of strength, low-temperature resistance or weldability. An H-type steel used as a structural material is a good economical material, and is increasingly applied in extremely cold regions. As special-purpose products, different companies have prepared such steels, and developed low-temperature-resistant steel products according to characteristics of their equipment.

Patent application CN102021475A discloses a preparation method for a hot-rolled H-type steel for low-temperature-resistant structures. Components of the steel of the invention include, in percentage by weight, 0.12-0.22% of C, 0.10-0.4% of Si, 1.1-1.50% of Mn, less than or equal to 0.025% of P, less than or equal to 0.025% of S, 0.02-0.05% of Nb, and the balance of Fe and trace impurities. A rolling process of this invention requires that in a rolling deformation system, cogging is carried out with a large reduction, and final rolling is carried out with a large reduction rate, which requires a high rolling force, making it impossible to manufacture steels of some specifications; and it achieves a cumulative reduction rate of 30%-40% in the last 2 passes and controls the deformation of finishing passes to 60%-70%, which means high requirements on mill capabilities.

Patent application CN103667910A discloses a hot-rolled H-type steel with excellent low-temperature impact toughness and a manufacturing method thereof. The steel is composed of the following chemical components by mass percentage: 0.05-0.18% of C, 0.15-0.40% of Si, 1.0-1.50% of Mn, 0.010-0.050% of V, 0.015-0 0.050% of Nb, 0.005-0.025% of Ti, less than or equal to 0.035% of Al, less than or equal to 0.020% of P, less than or equal to 0.015% of S, and the balance of Fe and inevitable impurities. This invention uses multiple microalloying elements such as Nb, V and Ti, which do not reflect transverse impact toughness, and the high carbon content causes low welding properties. The relatively high carbon content is prone to cause an abnormal structure, resulting in fluctuations in impact toughness, and therefore has some influence on subsequent user applications.

Patent application CN101255527A discloses a boron-added H-type steel with excellent low-temperature impact toughness and a preparation method therefor. Components of the steel of this invention include, in percentage by weight, 0.08-0.20% of C, 1.00-1.60% of Mn, 0.10-0.55% of Si, less than or equal to 0.025% of P, less than or equal to 0.025% of S, 0.015-0.035% of Nb, 0.0005-0.0012% of B, and the balance of Fe and trace impurities. The excessively high carbon content causes low welding properties; and low temperature of the product is -40°C longitudinally.

Patent CN105018861B discloses a low-cost normalized hot rolled H-type steel and a preparation method therefor. Chemical components of the H-type steel include, in percentage by weight (%): 0.04-0.15 of C, 0.15-0.50 of Si, 0.95-1.65 of Mn, less than or equal to 0.020 of P, less than or equal to 0.015 of S, more than or equal to 0.02 of Al, less than or equal to 0.55 of Cu, less than or equal to 0.30 of Cr, less than or equal to 0.50 of Ni, less than or equal to 0.10 of Mo, less than or equal to 0.03 of B, 0.02-0.060 of V, less than or equal to 0.04 of As+Sn+P+S, and the balance of Fe and inevitable impurities. This patent uses unitary V microalloying, resulting in low impact toughness and a high crack sensitivity index, so its use in extremely low-temperature environments is limited to some extent. CN 110 938 778 A discloses a H-type steel.

In the above-mentioned prior art, simple microalloying is not conducive to improving the surface quality of cast billets, and toughness enhancement is severely restricted thereby; furthermore, the excessively high carbon content is liable to cause welding defects and lead to a high mill load, such that bending, deflection and the size of a rolled piece are not easy to control, which imposes high requirements for equipment, resulting in relatively low overall performance of the H-type steel and a relatively low qualification rate of the size of the finished product.

### SUMMARY OF THE INVENTION

An object of the present invention is to overcome the above-mentioned problems and provide a low-temperature-resistant hot-rolled H-type steel for 355 MPa marine engineering according to claim 1 and a preparation method therefor, according to claim 2. This steel is a low-temperature-resistant hot-rolled H-type steel for use in the field of marine engineering in low-temperature environments in polar regions, with the characteristics of a simple and reliable preparation process, excellent impact toughness under low-temperature conditions, low welding crack sensitivity, excellent welding properties, etc., and meets the requirements of applications of hot-rolled H-type materials in the fields of offshore oil platform projects and marine wind power engineering in arctic and antarctic and other extremely cold regions.

To achieve the above object, the present invention adopts the following technical solution:
a low-temperature-resistant hot-rolled H-type steel for 355 MPa marine engineering, the H-type steel including the following chemical components in percentage by weight: 0.040-0.070 of C, 0.015-0.30 of Si, 1.20-1.50 of Mn, less than or equal to 0.015 of P, less than or equal to 0.010 of S, 0.020-0.040 of Nb, 0.008-0.025 of Ti, 0.10-0.50 of Ni, 0.015-0.050 of Al, 0.0003-0.0008 of B, less than or equal to 0.04 of As+Sn+Cu+Zn, and the balance of Fe and inevitable impurities. Gases in the steel is controlled during smelting to less than or equal to 0.0040 of N and less than or equal to 0.0015 of T.[O] in percentage by weight.

In the H-type steel, a carbon equivalent index CEV=C+Mn/6+(Cr+Mo+V)/5+(Ni+Cu)/15<0.37; and a crack sensitivity coefficient Pcm=C+Si/30+Mn/20+Cu/20+Ni/60+Cr/20+Mo/15+V/10+5B<0.20.

Preferably, 0.01≤As+Sn+Cu+Zn≤0.04.

Design principles of the chemical elements in the 355 MPa-grade hot-rolled H-type steel of the present invention are as follows:
Carbon: As the strength requirement of the H-type steel is 355 MPa grade, the low carbon component design is adopted, which on the one hand, can ensure a reasonable proportion of fine lamellar pearlite structure of the low-temperature-resistant H-type steel and increase the proportion of polygonal ferrite, thereby being conducive to a substantial increase of toughness under the premise of strength guarantee. On the other hand, the low carbon design can avoid the generation of Widmanstatten and variant pearlite structures, and controlling the carbon content below the peritectic reaction range is easy for controlling cracks and segregation structure, so the carbon content cannot be too high, and is controlled to 0.040% - 0.070%.

Silicon: Si is a deoxidizing element and is conducive to improving strength; and to ensure that a large amount of Si-containing Fe2SiO4 is not formed on the surface to affect the surface quality, an upper limit of the Si content is set to 0.30% or less, preferably 0.25% or less, more preferably 0.20% or less.

Manganese: The element Mn can stabilize austenite structure, increase the hardenability of the steel, and also improve the strength of the steel by solid solution strengthening, but abnormal structure is liable to be generated if the content of the element is too high. To ensure the strength and crack sensitivity, the Mn content is set to 1.20% or more, more preferably 1.30% or more. The element Mn has a high segregation tendency in the steel, and is detrimental to indexes of mechanical properties such as toughness and plasticity if added excessively. Considering various factors in combination, the Mn content in the H-type steel is controlled in the range of 1.20-1.50%.

Phosphorus: Grain boundaries are liable to be embrittled if the content of the element phosphorus is too high, so the lower the phosphorus content is controlled to be, the better the effect is, so as to improve low-temperature toughness; and thus P is controlled to 0.015% or less.

Sulfur: An excessively high content of the element sulfur is prone to produce much sulfides such as MnS, and cause complex deformation of the section steel, eventually generating sulfide inclusions of different morphologies, which reduces low-temperature toughness, so S ≤ 0.010%

As, Sn, Cu, Zn: As residual elements in the steel, they have great influence on low-temperature impact toughness, and also have great influence on the surface quality. Therefore, As, Sn, Cu and Zn, as elements that cannot be completely removed from the steel, should be reduced as much as possible. Considering production practice and equipment capacity as well as cost control in combination, a lower limit of residual elements is not particularly limited, and the total amount of the four major residual elements is controlled in the range of As+Sn+Cu+Zn≤0.04%.

Aluminum: Al is added as a strong deoxidizing element in the preparation of the low-temperature steel. To ensure that the oxygen content in the steel is as low as possible, reduce the content of inclusions, and enable the excess aluminum after deoxidation and the element nitrogen in the steel to form AlN precipitates, which can increase the strength of the steel and can refine the austenite grains when being heated, therefore, the content of aluminum as a deoxidizing element and a fine-grain strengthening element is controlled within 0.015-0.050% in the present invention.

Titanium: Titanium is a strong carbonitride forming element. In micro-Ti treated steel, adding Ti is beneficial to fixing the N in the steel. TiN formed therefrom can ensure the austenite grains do not excessively grow when the steel billet is heated, thereby achieving the purpose of refining the original austenite grains. TiN is generally formed at high temperature, and Ti in micro-titanium-treated steel generally exists and functions in the form of TiN. Furthermore, Ti-containing precipitates can also prevent grain growth in a heat-affected zone during welding, and can also function to improve welding properties of the finished steel sheet. Therefore, the added amount of Ti is controlled to 0.008-0.025% or less in the present invention.

Niobium: Nb significantly increases the non-recrystallization temperature of austenite, and functions to refine grains in controlled rolling. It improves the strength of the steel, and can significantly increase the toughness of the steel, especially with an obvious effect of low-temperature toughness; and a very small amount of Nb can significantly refine grains of the matrix structure, and increase the strength. The Nb content is controlled to 0.020% to 0.040% in the present invention.

Nickel: Ni improves the strength of the steel by solid solution strengthening, and is also an extremely effective element for improving low-temperature toughness, while improving the high-temperature plasticity of the steel in the continuous casting process and reducing the generation of defects. In one aspect, Ni functions to expand the austenite area and improve the hardenability. In another aspect, it can refine the pearlite lamellae to refine the pearlite, thereby achieving a fine-grain strengthening effect. Furthermore, an appropriate amount of nickel also achieves corrosion resistance to some extent, thereby improving the service life of the steel. Therefore, the Ni content of the steel is controlled in the range of 0.10% to 0.50%.

Boron: The element B in the steel significantly improves the hardenability, improves the high-temperature strength of the steel, and can also improve mechanical properties, cold deformation properties, welding properties and high-temperature properties. Acicular ferrite formed after the element B is added can effectively prevent crack propagation, thereby improving the toughness of the structure. Furthermore, a B-containing precipitated phase can reduce phosphorus and sulfur polarization at grain boundaries and intergranular fracture resulting therefrom, and can also improve the low-temperature toughness. Adding too much element B can cause excessive precipitation of B at grain boundaries to produce a network B-containing phase, which instead affects the strength at the grain boundaries and reduces the impact toughness. Considering effects in various aspects, 0.0003 to 0.0008% of B is added.

Nitrogen: A very high N content is liable to induce quality defects in the cast billet. Therefore, the present invention requires a nitrogen content of 0.0040% or less.

Oxygen: To avoid forming oxide inclusions of large particles, which deteriorates the toughness and plasticity of the steel, the present invention requires a total oxygen content T.[O]≤0.0015%.

The H-type steel has a yield strength ≥ 355 MPa, a tensile strength ≥ 470 MPa, an elongation ≥ 22%, transverse impact energy ≥ 51 J at -30°C, a longitudinal impact energy ≥ 110 J at -60°C, and a tough-brittle transition temperature below -65°C.

A preparation method for the above-mentioned hot-rolled low-temperature-resistant H-type steel of the present invention mainly includes the following steps: molten iron pretreatment, smelting in a converter, LF refining, rectangular/square billet casting, reheating in a heating furnace, descaling with high-pressure water, temperature-controlled rolling and controlled cooling, low-temperature straightening, sizing and sawing, and collection and palletizing.

Smelting, refining and continuous casting are performed on molten iron and scrap steel to form a cast billet that meets component requirements, and then the billet is reheated and rolled into a rolled piece, with controlled rolling and cooling being carried out during the rolling process. The main process of controlled rolling and cooling is: carrying out finish rolling with initial rolling temperature of 980°C or less for recrystallization controlled rolling, with a cumulative reduction rate of finish rolling being greater than or equal to 12%. Air-mist cooling of the rolled piece is carried out between stands, and finish rolling is carried out at a reduced rolling speed controlled to 1.8-2.5 m/s, with the final rolling temperature of finish rolling being controlled to 780°C to 815°C. The rolled piece is naturally cooled on a cooling bed, and is straightened in a straightening machine after product temperature drops to below 150°C. A flange thickness of the finished rolled product specification is in the range of 8-15 mm. Mechanical properties of H-type steels of different specifications are tested by sampling at a flange part.

Using composite microalloying to carry out controlled rolling and controlled cooling in the present invention can achieve batch preparation of products of different shapes and different specifications, and is suitable for production requirements of multi-specification small-batch steels for large marine engineering projects. Preparation of H-type steels of 20 or more different specifications can be achieved by microalloying. The final rolling temperature is controlled to 815°C or less, and structure regulation is carried out strictly in accordance with recrystallization and partial non-recrystallization controlled rolling to obtain micro P+F structure mainly. The cumulative reduction rate of finish rolling is greater than or equal to 12% in the present invention, and the rolling speed is regulated for different flange thicknesses to achieve structure refinement. Just on an ordinary section steel mill, the present invention can achieve the mechanical properties of the product, especially with good transverse and longitudinal extremely-low-temperature-resistant impact toughness.

The present invention adopts ultra-low carbon design to avoid serious internal quality defects in the cast billet, and also adopts recrystallization rolling so that the rolling force is lowered obviously and the rolling load of the mill is reduced; and the addition of the element Ni improves the probability of crack generation during the straightening process of the cast billet, and by adopting composite microalloying, the method is more suitable for the production of multi-specification variable-section H-type steel products. Using the stopper-type tundish technology well solves the problem that a nozzle is prone to clogging in the aluminum deoxidation pouring process.

The present invention also provides a preparation method for a hot-rolled low-temperature-resistant H-type steel, the method mainly including the following steps: molten iron pretreatment, smelting in a converter, LF refining, rectangular/square billet casting, reheating in a heating furnace, descaling with high-pressure water, temperature-controlled rolling, controlled cooling, low-temperature straightening, sizing and sawing, and collection and palletizing. Specific process control is as follows:

### 1) Smelting in a converter

Low-sulfur, low-arsenic blast furnace molten iron is used; in a slag system in a top-bottom combined blown converter, a single slag process is adopted for smelting, with final slag alkalinity and an endpoint target value being strictly controlled, wherein the final slag alkalinity is controlled to 2.0-3.8, and slag cutoff tapping is carried out, while deoxidization and alloying with aluminum-manganese-iron alloy is implemented in the tapping process. In the tapping process, a deoxidizer, ferrosilicon, metal manganese, a ferroniobium alloy, a nickel plate, etc. are added in batches; after deoxidation and alloying is completed, synthetic slag is added from an alloy chute while aligned to a steel flow to ensure that the composition in the converter meets internal control target requirements.

### 2) LF refining operation

The slag is modified with calcium carbide, calcium barium silica, and aluminum particles, such that the top slag is white slag or yellowish-white slag before leaving the station. After an initial sample is taken upon entering the station, oxygen is fixed (such as [O] ≤ 20 ppm), and if the oxygen potential does not reach the requirement, the oxygen potential is adjusted and then a titanium wire is fed; and a boron wire is fed before a calcium wire, and argon is blown from the bottom in the whole process according to the process requirement, wherein the argon pressure can be adjusted appropriately according to the conditions in the early stage, and the soft blowing time is not less than 15 minutes, and the refining period is not less than 25 minutes.

### 3) Continuous casting

Continuous casting adopts a full protection pouring process, and uses a large ladle long nozzle with a seal ring; a tundish is a stopper-type tundish for pouring molten steel, with a billet drawing speed being controlled to avoid clogging of the nozzle, and superheat being controlled to 15-30°C; the billet pulling speed is 0.7-1.0 m/min; and the smelted molten steel is cast into rectangular billets or square billets of various specifications in cross section.

### 4) Heating

The billet is hot delivered and hot charged into a furnace and heated, with heating and soaking temperature controlled to 1200-1260°C, for 120-180 min, and then taken out of the furnace for rolling. Nozzle working pressure is greater than or equal to 25 MPa. Oxide scale produced by heating in the heating furnace is cleared up, while ensuring the surface quality problem caused by adding the element Ni.

### 5) Controlled rolling and controlled cooling

Controlled rolling and cooling are performed in the rolling process. The main process of controlled rolling and cooling is: carrying out finish rolling with initial rolling temperature of 980°C or less for recrystallization controlled rolling, with a cumulative reduction rate of finish rolling being greater than or equal to 12%. Air-mist cooling of the rolled piece is carried out between stands, and finish rolling is carried out at a reduced rolling speed controlled to 1.8-2.5 m/s, with the final rolling temperature of finish rolling being controlled to 780°C to 815°C. The rolled piece is naturally cooled on a cooling bed, and is straightened in a straightening machine after product temperature drops to below 150 °C. A flange thickness of the finished rolled product specification is in the range of 8-15 mm. Mechanical properties of H-type steels of different specifications are tested by sampling at a flange part.

Compared with the prior art, the flange thickness present invention has the following advantages:
(1) With the ultra-low carbon design, rolling is easy to implement on an ordinary mill, and a low rolling force is required, which is more than 0.10% lower than that required for section steels of the same specification with a carbon content of 10% or more in other patents, and equipment requirement is low; furthermore, the carbon equivalent is significantly reduced, and welding properties are improved; (2) as the amount of the residual elements is controlled to be extremely low and microstructrue regulation is carried out, the low-temperature toughness is significantly improved; (3) due to Nb, V and Ti composite microalloying and the addition of appropriate amounts of the elements B and Ni, the low-temperature impact toughness is improved while ensuring the strength, and a certain Ti content can improve the stability of the heat-affected zone; (4) the use of the stopper-type tundish control technology can achieve Al deoxidation and improve the purity of molten steel, thereby solving the problem of nozzle clogging in the continuous casting process; and the invention can well solve such problems; (5) by controlling the mill speed in conjunction with the cooling process (i.e. air-mist cooling process), controlled rolling and controlled cooling is achieved, and by adopting recrystallization controlled rolling and partial non-recrystallization control, matrix structure refinement is achieved to obtain ultra-fine ferrite and pearlite, thereby improving the overall performance of the H-type steel; and (6) it adapts to the preparation of multi-specification small and medium-sized low-temperature-resistant hot-rolled H-type steels.

### BRIEF DESCRIPTION OF THE DRAWINGS

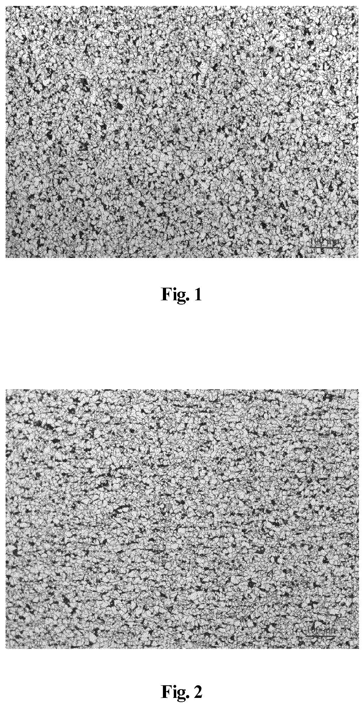

Fig. 1 is a micro-structure diagram of an H-type steel obtained in Embodiment 1 of the present invention;
Fig. 2 is a micro-structure diagram of an H-type steel obtained in Embodiment 2 of the present invention; and

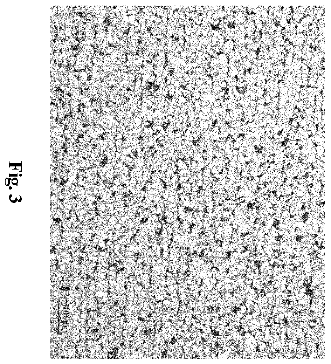

Fig. 3 is a micro-structure diagram of an H-type steel obtained in Embodiment 3 of the present invention.

### DETAILED DESCRIPTION

Specific implementations of the present invention will be further described in conjunction with the accompanying drawings and embodiments.

### Embodiments 1-3:

Control parameters of a smelting and rolling forming process of rectangular billets are shown in Table 1.

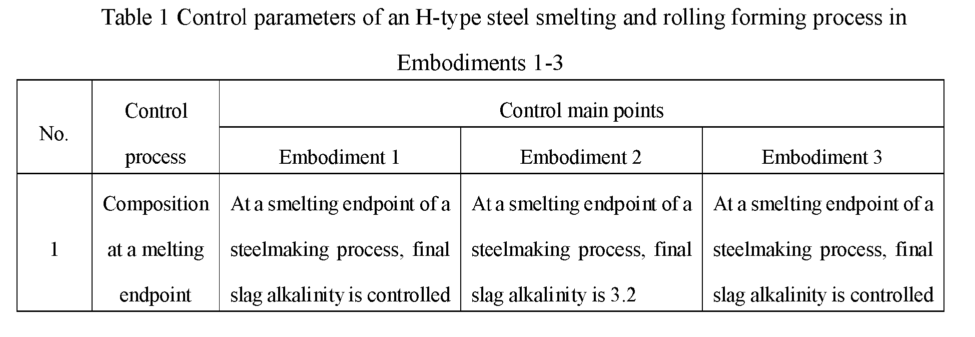

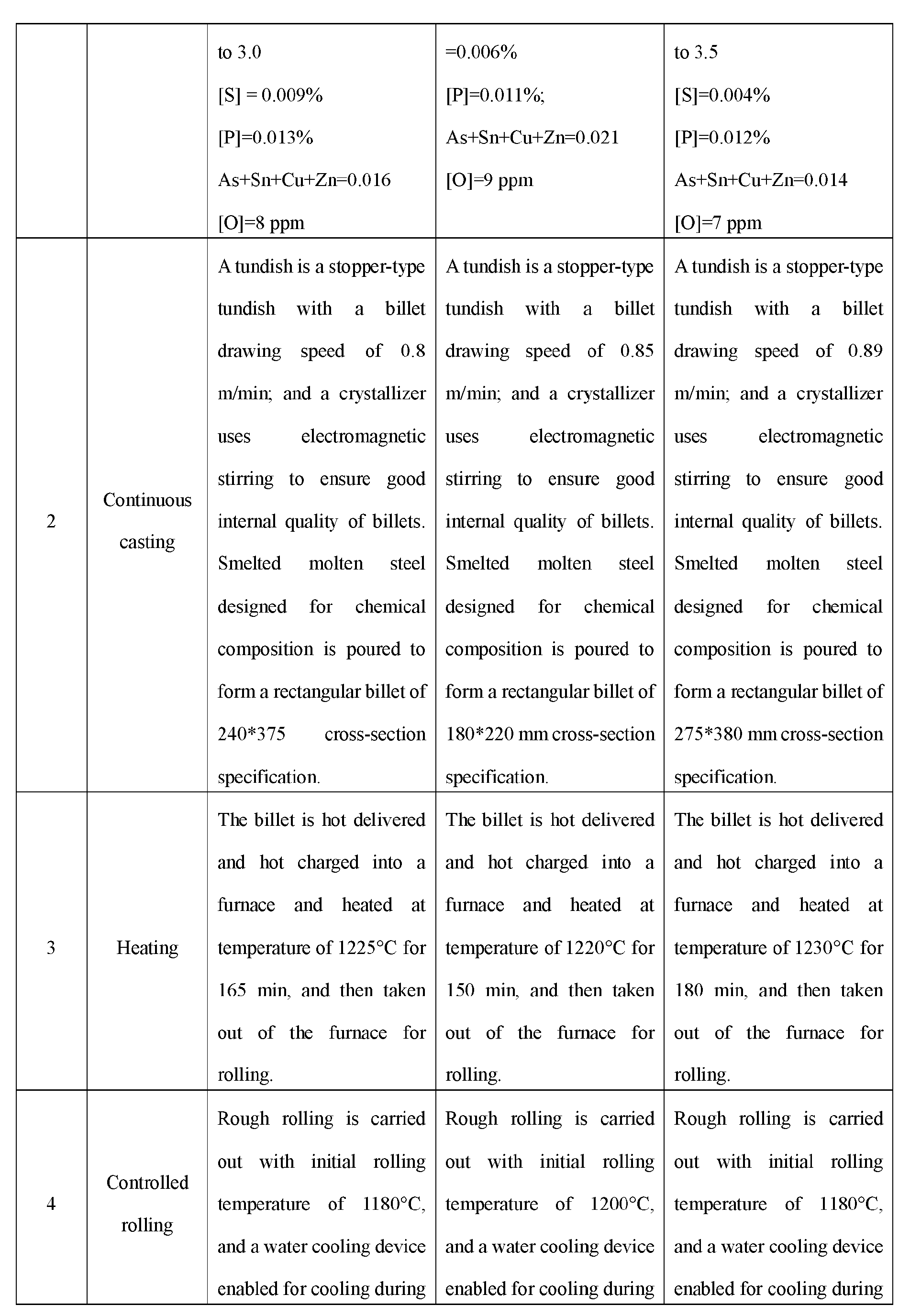

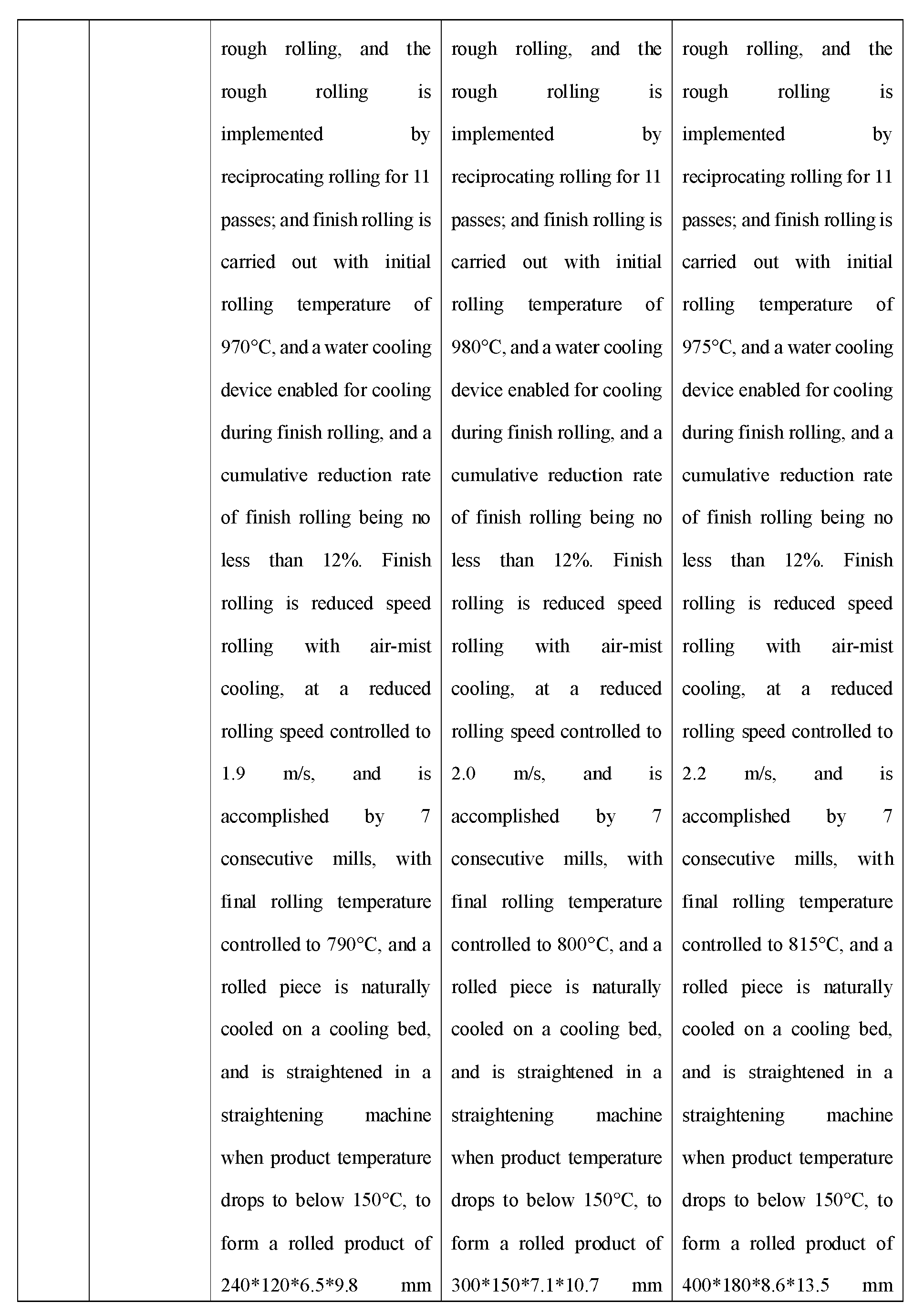

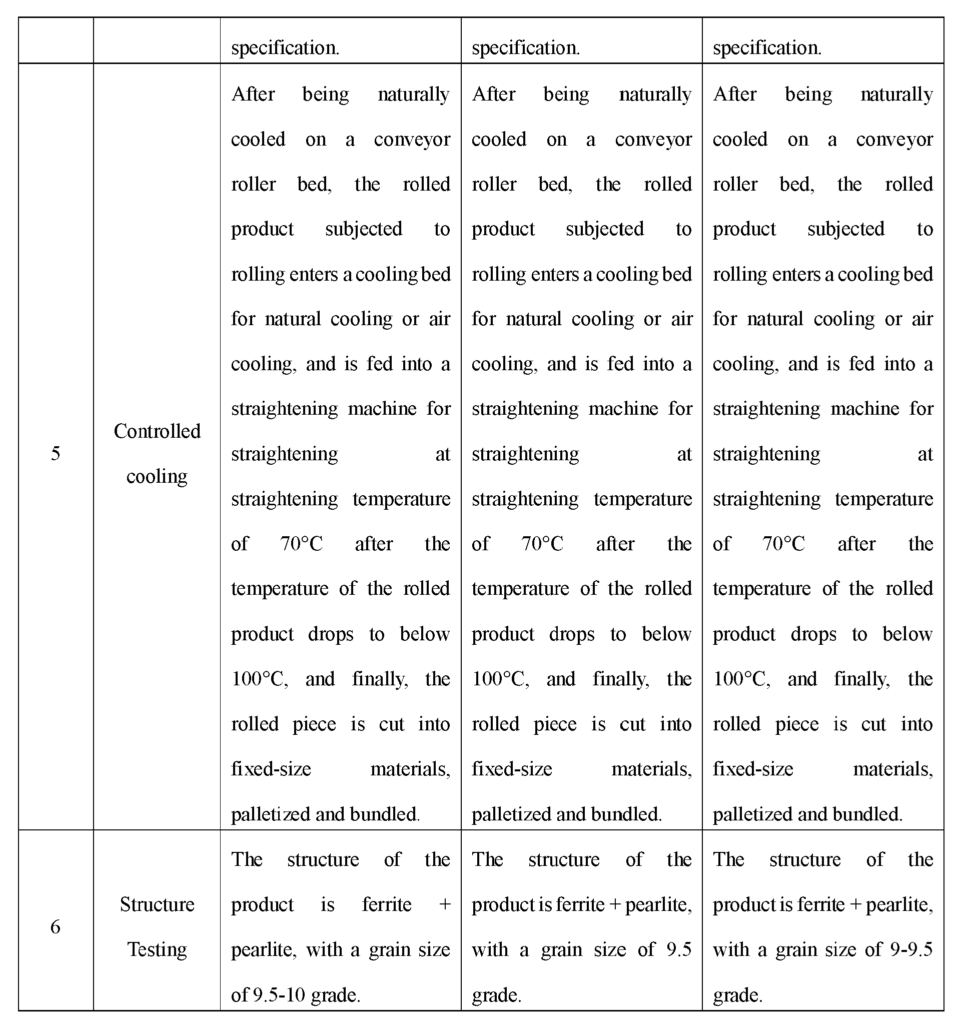

See Table 2 for the specific chemical compositions in Embodiments 1 to 3.

**Table 2 shows chemical compositions and carbon equivalents and crack sensitivity coefficients in Embodiments 1 to 3.**

| Component element | Embodiment 1 | Embodiment 2 | Embodiment 3 |
|---|---|---|---|
| C | 0.05 | 0.04 | 0.06 |
| Si | 0.28 | 0.25 | 0.29 |
| Mn | 1.40 | 1.39 | 1.38 |
| P | 0.013 | 0.011 | 0.012 |
| S | 0.009 | 0.006 | 0.004 |
| Al | 0.024 | 0.030 | 0.046 |
| Nb | 0.027 | 0.032 | 0.030 |
| Ti | 0.016 | 0.011 | 0.015 |
| Ni | 0.16 | 0.22 | 0.25 |
| B | 0.0003 | 0.0005 | 0.0007 |
| CEV | 0.28 | 0.27 | 0.29 |
| Pcm | 0.15 | 0.13 | 0.15 |

See Table 3 for specific process parameters of the continuous casting process.

**Table 3: Process parameters of the continuous casting process**

| Embodim ent | liquidus temperatu re/°C | Steel chargin g temper ature/° C | Tundish temperature/°C | | | Drawing speed/m·min-1 | | | degree of superheat/° C |
|---|---|---|---|---|---|---|---|---|---|
| Emb odiment 1 | 1516 | 15 65 | 15 32 | 15 33 | 15 27 | 0.79 | 0.78 | 0 .77 | 22 |
| Emb odiment 1 | 1520 | 15 64 | 15 35 | 15 38 | 15 31 | 0 .75 | 0 .71 | 0 .70 | 20 |
| Emb odiment 1 | 1530 | 15 70 | 15 40 | 15 38 | 15 42 | 0 .85 | 0 .88 | 0 .82 | 21 |

Property tests are performed on the product thus obtained, and a test piece for mechanical property testing is sampled on a flange of H-type steel at a point 1/3 of the distance from a lateral part to a core part, referring to the standard BS EN ISO 377-1997 "Location and preparation of test pieces for mechanical testing"; for a test method for yield strength, tensile strength and elongation, refer to the standard ISO 6892-1-2009 "Metallic materials - Tensile testing at ambient temperature"; and for an impact test method, refer to the standard ISO 148-1 "Metallic materials - Charpy pendulum impact test". Results are shown in Table 4.

**Table 4: Recording table of mechanical properties of the rolled product**

| Embodiment | | Embodiment 1 | Embodiment 2 | Embodiment 3 |
|---|---|---|---|---|
| Specification | | 240*120*6.5*9.8 | 300*150*7.1*10.7 | 400*180*8.6*13.5 |
| Yield Strength/MPa | | 395 | 388 | 385 |
| Tensile strength/MPa | | 514 | 491 | 489 |
| Elongation (%) | | 29.5 | 30.5 | 31 |
| Transverse impact energy at -30°C /J | 1 | 98 | 75 | 71 |
| | 2 | 91 | 68 | 68 |
| | 3 | 99 | 81 | 82 |
| | Average | 96 | 75 | 74 |
| Longitudinal impact energy at -60°C /J | 1 | 170 | 156 | 140 |
| | 2 | 185 | 146 | 138 |
| | 3 | 197 | 139 | 120 |
| | Average | 154 | 147 | 132 |

For anything not described in detail in the present invention, conventional technical knowledge in the art can be used.

Finally, it should be noted that the above embodiments are only used for describing instead of limiting the technical solutions of the present invention. Although the present invention is described in detail with reference to the embodiments, persons of ordinary skill in the art should understand that modifications or equivalent substitutions of the technical solutions of the present invention should be encompassed within the scope of the claims of the present invention so long as they do not depart from the scope of the appended claims.

## Claims

1. A low-temperature-resistant hot-rolled H-type steel for marine engineering having a yield strength > 355 MPa, a tensile strength > 470 MPa, an elongation > 22%, transverse impact energy > 51 J at -30°C, a longitudinal impact energy ≥ 110 J at -60°C, and a tough-brittle transition temperature below -65°C, measured according to the description, wherein chemical components of the H-type steel comprise, in percentage by weight, 0.040-0.070 of C, 0.015-0.30 of Si, 1.20-1.50 of Mn, less than or equal to 0.015 of P, less than or equal to 0.010 of S, 0.020-0.040 of Nb, 0.008-0.025 of Ti, 0.10-0.50 of Ni, 0.015-0.050 of Al, 0.0003-0.0008 of B, less than or equal to 0.04 of As+Sn+Cu+Zn, less than or equal to 0.0040 of N and less than or equal to 0.0015 of total oxygen content, the rest are Fe and inevitable impurities, and gases in the steel is controlled during smelting to less than or equal to 0.0040 of N and less than or equal to 0.0015 of total oxygen content in percentage by weight and wherein a flange thickness of the finished rolled product specification is in the range of 8-15 mm.

2. A preparation method for the low-temperature-resistant hot-rolled H-type steel for 355 MPa marine engineering according to claim 1, further comprising the following steps:
performing smelting, refining and continuous casting on molten iron and scrap steel to form a cast billet, then heating the billet with heating and soaking temperature controlled to 1180-1250°C, for 120-180 min, and then taking the billet out of a furnace for rolling; carrying out rough rolling with initial rolling temperature controlled to 1150°C or more, and after holding temperature, carrying out finish rolling with initial finish rolling temperature at 980°C or less for recrystallization controlled rolling, and final finish rolling temperature controlled to 780°C to 815°C, cooling a rolled piece thus formed on a cooling bed, and after product temperature drops to below 150°C, carrying out straightening in a straightening machine; wherein a cumulative reduction rate of finish rolling is greater than or equal to 12% and wherein the finish rolling is carried out at a reduced rolling speed controlled to 1.8-2.5 m/s.

## Patentansprüche

1. Ein niedrigtemperaturbeständiger warmgewalzter Stahl vom Typ H für den Schiffsmaschinenbau mit einer Streckgrenze > 355 MPa, einer Zugfestigkeit > 470 MPa, einer Bruchdehnung > 22 %, transversale Schlagenergie > 51 J bei -30 °C, einer longitudinale Schlagenergie ≥ 110 J bei -60 °C, und einer Zäh-Spröd-Übergangstemperatur von unter -65 °C, gemessen gemäß der Beschreibung, wobei die chemischen Bestandteile des Stahls vom Typ H in Gewichtsprozent Folgendes beinhalten: zu 0,040-0,070 C, zu 0,015-0,30 Si, zu 1,20-1,50 Mn, zu weniger als oder gleich 0,015 P, zu weniger als oder gleich 0,010 S, zu 0,020-0,040 Nb, zu 0,008-0,025 Ti, zu 0,10-0,50 Ni, zu 0,015-0,050 AI, zu 0,0003-0,0008 B, zu weniger als oder gleich 0,04 As + Sn + Cu + Zn, zu weniger als oder gleich 0,0040 N und zu weniger als oder gleich 0,0015 des Gesamtsauerstoffgehalts, der Rest sind Fe und unvermeidliche Verunreinigungen, und Gase im Stahl werden während des Schmelzens auf weniger als oder gleich 0,0040 N und weniger als oder gleich 0,0015 des Gesamtsauerstoffgehalts in Gewichtsprozent kontrolliert, und wobei eine Flanschdicke der Spezifikation des fertig gewalzten Produkts im Bereich von 8-15 mm liegt.

2. Ein Verfahren zur Herstellung des niedrigtemperaturbeständigen warmgewalzter Stahls vom Typ H für den Schiffsmaschinenbau bei 355 MPa gemäß Anspruch 1, ferner beinhaltend die folgenden Schritte:
Durchführen von Schmelzen, Weiterverarbeiten und Stranggießen von Flüssigeisen und Stahlschrott, um einen gegossenen Pressling zu bilden, anschließendes Erhitzen des Presslings mit einer auf 1180-1250 °C kontrollierten Heiz- und Haltetemperatur für 120-180 min, und dann Herausnehmen des Presslings aus einem Ofen zum Walzen; Durchführen eines Vorwalzens mit einer auf 1150 °C oder mehr kontrollierten Anfangswalztemperatur und nach dem Halten der Temperatur, Durchführen eines Fertigwalzens mit einer anfänglichen Fertigwalztemperatur von 980 °C oder weniger für ein rekristallisationskontrolliertes Walzen und einer auf 780 °C bis 815 °C kontrollierten Endfertigwalztemperatur, Abkühlen eines so gebildeten gewalzten Stücks auf einem Kühlbett und, nachdem die Produkttemperatur auf unter 150 °C gefallen ist, Durchführen eines Richtens in einer Richtmaschine; wobei eine kumulative Reduktionsrate des Fertigwalzens größer als oder gleich 12 % ist und wobei das Fertigwalzen mit einer auf 1,8-2,5 m/s reduzierten Walzgeschwindigkeit vorgenommen wird.

## Revendications

1. Un acier de type H laminé à chaud résistant aux basses températures pour génie maritime ayant une limite d'élasticité > 355 MPa, une résistance à la traction > 470 MPa, un allongement > 22 %, une énergie d'impact transversale > 51 J à - 30 °C, une énergie d'impact longitudinale ≥ 110 J à - 60 °C, et une température de transition ductile-fragile en dessous de - 65 °C, mesurée selon la description,
dans lequel des composants chimiques de l'acier de type H comprennent, en pourcentage en poids, 0,040 à 0,070 de C, 0,015 à 0,30 de Si, 1,20 à 1,50 de Mn, une valeur inférieure ou égale à 0,015 de P, une valeur inférieure ou égale à 0,010 de S, 0,020 à 0,040 de Nb, 0,008 à 0,025 de Ti, 0,10 à 0,50 de Ni, 0,015 à 0,050 de Al, 0,0003 à 0,0008 de B, une valeur inférieure ou égale à 0,04 de As + Sn + Cu + Zn, une valeur inférieure ou égale à 0,0040 de N et une valeur inférieure ou égale à 0,0015 de teneur en oxygène totale, le reste est Fe et des impuretés inévitables, et des gaz dans l'acier sont contrôlés, durant la fusion, à une valeur inférieure ou égale à 0,0040 de N et une valeur inférieure ou égale à 0,0015 de teneur en oxygène totale en pourcentage en poids et dans lequel une épaisseur de semelle de la spécification de produit laminé fini est dans la plage de 8 à 15 mm.

2. Un procédé de préparation pour l'acier de type H laminé à chaud résistant aux basses températures pour génie maritime à 355 MPa selon la revendication 1, comprenant en outre les étapes suivantes :
réalisation de fusion, d'affinage et de coulée continue sur fer fondu et ferrailles d'acier pour former une billette coulée, puis chauffage de la billette avec température de chauffage et d'immersion contrôlée à 1 180 à 1 250 °C, pendant 120 à 180 min, et puis extraction de la billette hors d'un four pour laminage ; exécution de laminage grossier avec température de laminage initiale contrôlée à 1 150 °C ou plus, et, après maintien de la température, exécution de laminage de finition avec température de laminage de finition initiale à 980 °C ou moins pour laminage contrôlé de recristallisation, et température de laminage de finition finale contrôlée à 780 °C à 815 °C, refroidissement d'une pièce laminée ainsi formée sur un lit de refroidissement, et, après que la température du produit s'abaisse en dessous de 150 °C, exécution de dressage dans une machine de dressage ; dans lequel un taux de réduction cumulatif de laminage de finition est supérieur ou égal à 12 % et dans lequel le laminage de finition est exécuté à une vitesse de laminage réduite contrôlée à 1,8 à 2,5 m/s.
